# EUROPEAN PATENT APPLICATION

(11) **EP 4 745 767 A1**
(43) Date of publication of application: **20.05.2026**
(21) Application number: 24855261.4
(22) Date of filing: 18.03.2024
(51) Int. Cl.: G06F 9/445

(54) **TRAINING METHOD AND APPARATUS, RESOURCE CONFIGURATION METHOD AND APPARATUS, SYSTEM AND RELATED DEVICE**

(30) Priority: 24.08.2023 CN 202311075797
(71) Applicant: HUAWEI TECHNOLOGIES CO., LTD., Shenzhen 518129 (CN)
(72) Inventor: ZENG, Dexun, Shenzhen, Guangdong 518129 (CN); HUI, Weifeng, Shenzhen, Guangdong 518129 (CN); FU, Sheng, Shenzhen, Guangdong 518129 (CN); DENG, Mingjian, Shenzhen, Guangdong 518129 (CN)
(74) Representative: Gill Jennings & Every LLP
(86) International application number: PCT/CN2024/082146
(87) International publication number: WO 2025/039530

(57) **Abstract**

A training method, a resource configuration method, an apparatus, a system, and a related device are provided, and relate to the field of computer technologies. The method includes: performing policy training based on a system resource parameter and an acceleration package set for an application, where the acceleration package set includes at least one acceleration package; and outputting a configuration policy after performing policy training, where the configuration policy is used to perform performance optimization on an application set, and the application set includes at least one application. Therefore, the configuration policy determined by performing policy training based on the system resource parameter and the at least one acceleration package can be for optimizing performance of at least one application included in a first application set. In this way, after resource configuration is subsequently performed on other applications of a same type or with a same identifier according to the configuration policy, performance of the other applications can also reach a high level. In addition, in a process of performing performance optimization on the application, internal data of the application does not need to be accessed. This can effectively ensure security of the application.

## Description

This application claims priority to Chinese Patent Application No. 202311075797.7, filed with the China National Intellectual Property Administration on August 24, 2023 and entitled "TRAINING METHOD, RESOURCE CONFIGURATION METHOD, APPARATUS, SYSTEM, AND RELATED DEVICE", which is incorporated herein by reference in its entirety.

### TECHNICAL FIELD

This application relates to the field of computer technologies, and in particular, to a training method, a resource configuration method, an apparatus, a system, and a related device.

### BACKGROUND

Currently, one or more applications are usually deployed on a computer, and corresponding services can be provided during running of the applications. For example, when database applications such as Hive are deployed on computing devices, services such as data storage, management, query, and analysis may be provided.

In an actual application scenario, applications in the computing devices often have performance bottlenecks. For example, response delays of the applications cannot reach a 100-millisecond level, or throughputs of the applications are low. In this case, technical experts usually adjust, in the computing devices based on technical experience, resources configured for the applications, to optimize performance of the applications in the computing devices based on adjusted resource configurations. However, in this manner of manually determining the resources configured for the applications, performance improvement of the applications is limited, and performance optimization effects are poor.

### SUMMARY

This application provides a training method, to determine a proper configuration policy, so that performance of an application can reach a high level after resource configuration is performed on the application according to the configuration policy. In addition, this application further provides a corresponding resource configuration apparatus, data processing system, computing device, computer-readable storage medium, and computer program product.

According to a first aspect, this application provides a training method. The method may be performed by a corresponding training apparatus. Specifically, the training apparatus performs policy training based on a system resource parameter and an acceleration package set for an application. The system resource parameter may indicate a system resource that can be allocated to at least one first application (for example, a database application) included in a first application set. The system resource may be, for example, a hardware resource like a processor or a memory, or may be a resource like a service in an operating system. The acceleration package set for the application may include at least one acceleration package, and the acceleration package may be used to accelerate running of the application, for example, may be used to accelerate processing operations such as memory allocation and memory release for the application. Different acceleration packages may accelerate the application in different aspects. After performing policy training, the training apparatus outputs a first configuration policy, where the first configuration policy is used to perform performance optimization on the first application set.

Therefore, the first configuration policy determined by the training apparatus by performing policy training based on the system resource parameter and the at least one acceleration package can be for optimizing performance of the at least one first application included in the first application set, for example, may be for optimizing the performance of the at least one first application to meet a performance fulfillment condition. In this way, after resource configuration is subsequently performed according to the first configuration policy on at least one second application that is in a second application set and that has a same identifier or a same type as the at least one first application in the first application set, performance of running the at least one second application based on an allocated resource can also reach a high level. In addition, in a process of performing performance optimization on the at least one first application or achieving the high level of the performance of the at least one second application, internal data of the first application and the second application does not need to be accessed. This can effectively ensure security of the application.

In a possible implementation, the acceleration package set for the application is used to accelerate a plurality of application sets of different types or with different identifiers. In this case, the training apparatus may further create a correspondence between the first configuration policy and the first application set, and specifically, may create a correspondence between the first configuration policy and an identifier/a type of the first application set. In this way, subsequently, the first configuration policy may be selected based on the correspondence to configure resources for applications in another application set that have a same identifier/type as the first application set, so that performance of running the applications in the another application set based on the allocated resource can reach a high level.

In a possible implementation, the first configuration policy output by the training apparatus includes at least one of a subset of the system resource parameter and a subset of the acceleration package set. In other words, a resource used to perform performance optimization on the at least one first application in the first application set may be all/a part of all system resources, or all/a part of all acceleration packages.

In a possible implementation, the at least one first application included in the first application set is deployed on a host, that is, the training apparatus may determine, for an application that is run on a physical device, the first configuration policy that can be for improving performance. Alternatively, the at least one first application included in the first application set is deployed in a virtual instance, where the virtual instance may be, for example, a virtual machine or a container, that is, the training apparatus may determine, for an application running in a virtualization environment, the first configuration policy that is for improving performance of the application.

In a possible implementation, when outputting the first configuration policy, the training apparatus may specifically output, when a result obtained by performing performance detection on the at least one first application indicates that the performance of the at least one first application meets the performance fulfillment condition, the first configuration policy corresponding to the first application set. The performance detection performed on the at least one first application may be, for example, a performance test like a stress test. In this way, the training apparatus may perform performance detection on the at least one first application, to determine that an allocated resource indicated by the first configuration policy can be for improving the performance of the at least one first application, so that the first configuration policy used when the performance of the at least one first application reaches a high level can be determined.

In a possible implementation, when performing policy training based on the system resource parameter and the acceleration package set for the application, the training apparatus may specifically first obtain a plurality of historical performance detection results. Each historical performance detection result is a result generated by performing performance detection in a historical time period (for example, in the past 24 hours) on the at least one first application in the first application set, none of the plurality of historical performance detection results meets the performance fulfillment condition, and the at least one first application in the first application set generates different historical performance detection results according to different configuration strategies. Then, the training apparatus obtains the first configuration policy in an automatic optimization manner based on the plurality of historical performance detection results. In this way, the training apparatus may determine, through the automatic optimization based on configuration strategies used for the at least one first application in the first application set in the past time period and performance of the at least one first application, the first configuration policy that can cause the performance of the at least one first application to reach the high level, to improve efficiency of determining the first configuration policy.

In a possible implementation, when performing policy training based on the system resource parameter and the acceleration package set for the application, the training apparatus may specifically first obtain the type or the identifier of the first application set, and then perform policy training based on the system resource parameter and an acceleration package set corresponding to the type or the identifier of the first application set. For example, a configuration policy determined by the training apparatus for the first application set each time may include one or more acceleration packages corresponding to the identifier/type of the first application set, so that a necessary acceleration package that can be for improving the performance of the at least one first application in the first application set can be determined for the at least one first application. This helps improve the efficiency of determining the first configuration policy.

In a possible implementation, the training apparatus may further configure, by using the first configuration policy, a resource for the second application included in the second application set, where a type of the second application set is the same as the type of the first application set, or an identifier of the second application set is the same as the identifier of the first application set. In this way, after resource configuration is performed on at least one second application in the second application set according to the first configuration policy, performance of running the at least one second application based on an allocated resource can also reach a high level.

In a possible implementation, a deployment manner of the first application set is the same as a deployment manner of the second application set. To be specific, a manner in which the at least one second application in the second application set is deployed on one or more computing devices included in a computing device cluster 2 is the same as that in which the at least one first application in the first application set is deployed on one or more computing devices included in a computing device cluster 1. For example, the at least one first application in the first application set is deployed on one computing device included in the computing device cluster 1. In this case, the at least one second application in the second application set is deployed on one computing device included in the computing device cluster 2.

According to a second aspect, this application provides a resource configuration method. The method may be performed by a corresponding resource configuration apparatus. Specifically, the resource configuration apparatus selects a target configuration policy from a plurality of configuration strategies based on an identifier or a type of an application set. The application set includes at least one application, for example, a database application. The selected target configuration policy indicates a resource to be allocated to the at least one application in the application set. The allocated resource includes a system resource and an acceleration package set for the at least one application. The system resource may be, for example, a hardware resource like a processor or a memory, or may be a resource like a service in an operating system. The acceleration package set for the application may include at least one acceleration package, and the acceleration package may be used to accelerate running of the application, for example, may be used to accelerate processing operations such as memory allocation and memory release for the application. Different acceleration packages may accelerate the application in different aspects. Then, the resource configuration apparatus configures the resource for the at least one application according to the target configuration policy.

The resource allocated by the resource configuration apparatus to the at least one application in the application set includes not only the system resource but also the at least one acceleration package, and the acceleration package can be used to accelerate task processing for the application. Therefore, after the resource configuration apparatus configures the resource for the at least one application, performance of the at least one application can be improved based on at least the allocated acceleration package, that is, the performance of the at least one application can reach a high level.

In a possible implementation, performance of running the at least one application based on the resource meets a performance fulfillment condition. In this way, the resource allocated by the resource configuration apparatus to the at least one application can cause the performance of the at least one application to reach the high level.

In a possible implementation, the at least one application in the application set is deployed on one computing device, or the at least one application in the application set is deployed on a plurality of computing devices included in a computing device cluster. In this way, one or more applications in the application set may be flexibly deployed on one or more computing devices based on an actual application requirement, so that flexibility of solution implementation can be improved.

In a possible implementation, when configuring the resource for the at least one application according to the target configuration policy, the resource configuration apparatus may specifically configure, according to the target configuration policy, the resource for the at least one application on the plurality of computing devices that are included in the computing device cluster and on which the at least one application is deployed. The resource configuration apparatus may configure a resource on one computing device for each of the at least one application, for example, allocate a resource on a computing device A to an application a, and allocate a resource on a computing device B to an application b. Alternatively, the resource configuration apparatus may allocate resources on a plurality of computing devices to all resources of the at least one application, so that each of the at least one application can use the allocated resources. For example, the resource configuration apparatus allocates a processor on a computing device A, a memory on a computing device B, and an acceleration package on a computing device C to the at least one application, and each application may use the processor resource on the computing device A, use the memory resource on the computing device B, or use the acceleration package on the computing device C.

In a possible implementation, the resource configuration apparatus may further perform policy training based on a system resource parameter and an acceleration package set for an application. The system resource parameter indicates the system resource. For example, the system resource parameter may be a CPU name, to indicate a specific CPU on the computing device. After performing policy training, the resource configuration apparatus outputs a first configuration policy. The first configuration policy is used to perform performance optimization on at least one application included in a trained application set, and the first configuration policy is one of the plurality of configuration strategies. The first configuration policy determined by the resource configuration apparatus by performing policy training based on the system resource parameter and the at least one acceleration package can be for optimizing performance of at least one first application included in the application set used for the policy training, for example, may be for optimizing the performance of the at least one first application to meet the performance fulfillment condition. In this way, after resource configuration is subsequently performed according to the first configuration policy on at least one application in another application set that has a same identifier or a same type as the application set, performance of running the at least one application in the another application set based on an allocated resource can also reach a high level. During actual application, the resource configuration apparatus may obtain, for different application sets through training in a similar manner, configuration strategies (the configuration strategies cause performance of at least one application in the application sets to be high) corresponding to the application sets.

In a possible implementation, when performing policy training based on the system resource parameter and the acceleration package set for the application, the resource configuration apparatus may specifically first obtain the type or the identifier of the trained application set. Then, the resource configuration apparatus performs policy training based on the system resource parameter and an acceleration package set corresponding to the type or the identifier of the trained application set. For example, a configuration policy determined by the resource configuration apparatus for the application set each time may include one or more acceleration packages corresponding to the identifier/type of the application set, so that a necessary acceleration package that can be for improving the performance of the at least one first application in the application set can be determined for the at least one first application. This helps improve efficiency of determining the first configuration policy.

In a possible implementation, the acceleration package set used in a process in which the resource configuration apparatus performs policy training is used to accelerate a plurality of application sets of different types or with different identifiers. In this case, the resource configuration apparatus may further create a correspondence between the first configuration policy and the trained application set. In this way, subsequently, the resource configuration apparatus may select, based on the correspondence, the first configuration policy to configure resources for applications in another application set that have a same identifier/type as the application set, so that performance of running the applications in the another application set based on the allocated resource can reach a high level.

In a possible implementation, the first configuration policy includes at least one of a subset of the system resource parameter and a subset of the acceleration package set. In other words, a resource used to perform performance optimization on the at least one application in the application set used for training may be all/a part of all system resources, or all/a part of all acceleration packages.

In a possible implementation, when outputting the first configuration policy, the resource configuration apparatus may specifically output, when a result obtained by performing performance detection on the at least one application included in the trained application set indicates that performance of the at least one application included in the trained application set meets the performance fulfillment condition, the first configuration policy corresponding to the trained application set. The performance detection performed on the at least one application may be, for example, a performance test like a stress test. In this way, the resource configuration apparatus may perform performance detection on the at least one application, to determine that an allocated resource indicated by the first configuration policy can be for improving the performance of the at least one application, so that the first configuration policy used when the performance of the at least one application reaches a high level can be determined.

In a possible implementation, when performing policy training based on the system resource parameter and the acceleration package set for the application, the resource configuration apparatus may specifically first obtain a plurality of historical performance detection results. The historical performance detection result is a result generated by performing performance detection in a historical time period (for example, in the past 24 hours) on the at least one application included in the trained application set, none of the plurality of historical performance detection results meets the performance fulfillment condition, and the at least one application included in the trained application set generates different historical performance detection results according to different configuration strategies. Then, the resource configuration apparatus performs optimization based on the plurality of historical performance detection results to obtain the first configuration policy. In this way, the resource configuration apparatus may determine, through automatic optimization based on configuration strategies used for the at least one application in the trained application set in the past time period and performance of the at least one application, the first configuration policy that can cause the performance of the at least one application to reach the high level, to improve the efficiency of determining the first configuration policy.

According to a third aspect, this application provides a training apparatus. The training apparatus includes modules configured to perform the training method according to any one of the first aspect or the possible implementations of the first aspect.

According to a fourth aspect, this application provides a resource configuration apparatus. The resource configuration apparatus includes modules configured to perform the resource configuration method according to any one of the second aspect or the possible implementations of the second aspect.

According to a fifth aspect, this application provides a data processing system. The data processing system includes a training apparatus and a resource configuration apparatus. The training apparatus is configured to perform the training method according to any one of the first aspect or the possible implementations of the first aspect. The resource configuration apparatus is configured to perform the resource configuration method according to any one of the second aspect or the possible implementations of the second aspect.

According to a sixth aspect, this application provides a computing device. The computing device includes a processor and a storage. The processor and the storage communicate with each other. The processor is configured to execute instructions stored in the storage, to enable the computing device to perform the training method according to any one of the first aspect or the implementations of the first aspect, or enable the computing device to perform the resource configuration method according to any one of the second aspect or the implementations of the second aspect. It should be noted that the storage may be integrated into the processor, or may be independent of the processor. The computing device may further include a bus. The processor is connected to the storage through the bus. The storage may include a readable memory and a random access memory.

According to a seventh aspect, this application provides a computer-readable storage medium. The computer-readable storage medium stores instructions. When the instructions are run on a computing device, the computing device is enabled to perform the training method according to any one of the first aspect or the implementations of the first aspect, or the computing device is enabled to perform the resource configuration method according to any one of the second aspect or the implementations of the second aspect.

According to an eighth aspect, this application provides a computer program product including instructions. When the computer program product runs on a computing device, the computing device is enabled to perform the training method according to any one of the first aspect or the implementations of the first aspect, or the computing device is enabled to perform the resource configuration method according to any one of the second aspect or the implementations of the second aspect.

In this application, the implementations provided in the foregoing aspects may be further combined to provide more implementations.

### BRIEF DESCRIPTION OF DRAWINGS

FIG. 1 is a diagram of a structure of an example data processing system according to this application;
FIG. 2 is a schematic flowchart of a training method and a resource configuration method according to this application;
FIG. 3 is a schematic flowchart of a resource configuration method according to this application;
FIG. 4 is a diagram of a structure of another example data processing system according to this application;
FIG. 5 is a schematic flowchart of another training method and another resource configuration method according to this application;
FIG. 6 is a diagram of a structure of a training apparatus according to this application;
FIG. 7 is a diagram of a structure of a resource configuration apparatus according to this application; and
FIG. 8 is a diagram of a hardware structure of a computing device according to this application.

### DESCRIPTION OF EMBODIMENTS

To improve performance of an application in a computing device, this application provides a training method, to determine, through policy training, a configuration policy that can cause the performance of the application to reach a high level, so that the performance of the application can reach the high level after resource configuration is performed on the application in the computing device according to the configuration policy.

For ease of understanding the technical solutions of this application, the following first describes related technical terms in this application.

Application (application): The application may also be referred to as an application program (application program), and is usually a program written for a special application purpose of a user, for example, a browser, a media player, an aeronautical flight simulator, or an image editor.

Virtual instance: The virtual instance is an instance created by using a virtualization technology, for example, a virtual machine or a container. The virtual instance may also be referred to as a guest (guest), and one or more applications may be deployed in the virtual instance. Correspondingly, a computing device on which the virtual instance is located may be referred to as a host (host). Virtualization software such as hypervisor may be deployed between the guest and the host, and is used to create, schedule, and manage virtual resources on the computing device. Usually, the guest and the host are isolated from each other to ensure security of the guest and the host.

Virtual machine: The virtual machine is a complete software-simulated computer system that has complete hardware system functions and that runs in a completely isolated environment, that is, a computer system obtained by simulating through virtualization. According to the virtualization technology, a plurality of virtual computing devices can be simulated on one physical computing device, and a function of each virtual computing device is basically the same as that of the physical computing device.

Container: The container is an instance using technologies such as a namespace technology and a cgroup technology that are supported by a kernel, to isolate an application and a dependency package of the application in an independent running environment. Usually, the container may not include an operating system. In this case, the container may run in an operating system of the host as a process.

Virtualization software: The virtualization software is software that creates, schedules, and manages virtual resources on a computing device, and may be, for example, hypervisor. Usually, the virtualization software can use underlying hardware resources to create a virtual environment that includes a virtual processor, a memory, a peripheral, and the like. In addition, in this environment, a guest operating system (guest operating system, guest OS) considers that the guest operating system runs on a real computing device, and exclusively owns all resources on the computing device. The virtualization software may construct a plurality of virtual machine environments simultaneously, to allow concurrent execution of a plurality of guest operating systems.

Acceleration package: The acceleration package is a program that can accelerate running of an application in this application. For example, the acceleration package may be an acceleration package used to accelerate a memory processing operation for the application, an acceleration package used to accelerate a network communication speed for the application, an acceleration package used to accelerate data encryption for the application, or an acceleration package used to accelerate a data compression process for the application.

System resource parameter: The system resource parameter is a parameter indicating a resource configured for an application on at least one computing device. The system resource parameter may be, for example, an identifier of a processor core (computing resource), a size of a cache (cache) (storage resource), or an identifier of a network interface card queue (network resource), to indicate resources such as a processor core, a cache, and a network interface card queue that are configured for the application.

Configuration policy: The configuration policy is a policy indicating a resource configured for an application on at least one computing device, and may include a parameter indicating the configured resource.

Performance test: The performance test means simulating software and hardware environments of an actual application and load during application running, and running a tested application, to test performance (and reliability and stability) of the application. During actual application, specifically, a stress test may be performed on the application, a data processing delay of the application in a running process may be tested, or the like.

Performance fulfillment condition: The performance fulfillment condition is a condition when performance of an application meets a preset requirement (that is, fulfillment), and may be a threshold representing lowest performance. For example, when a throughput is used to represent the performance of the application, the performance fulfillment condition may be specifically a throughput threshold. In this case, when an actual throughput of the application is greater than the throughput threshold, it indicates that the performance of the application meets the performance fulfillment condition. On the contrary, when an actual throughput of the application is less than the throughput threshold, it indicates that the performance of the application does not meet the performance fulfillment condition.

Automatic optimization algorithm: The automatic optimization algorithm is a method for automatically finding an optimal solution. Usually, based on a mathematical model and an algorithm technology, a value of a parameter may be continuously adjusted through iterative calculation and an optimization policy, to achieve an objective of the optimal solution or an objective of approaching the optimal solution.

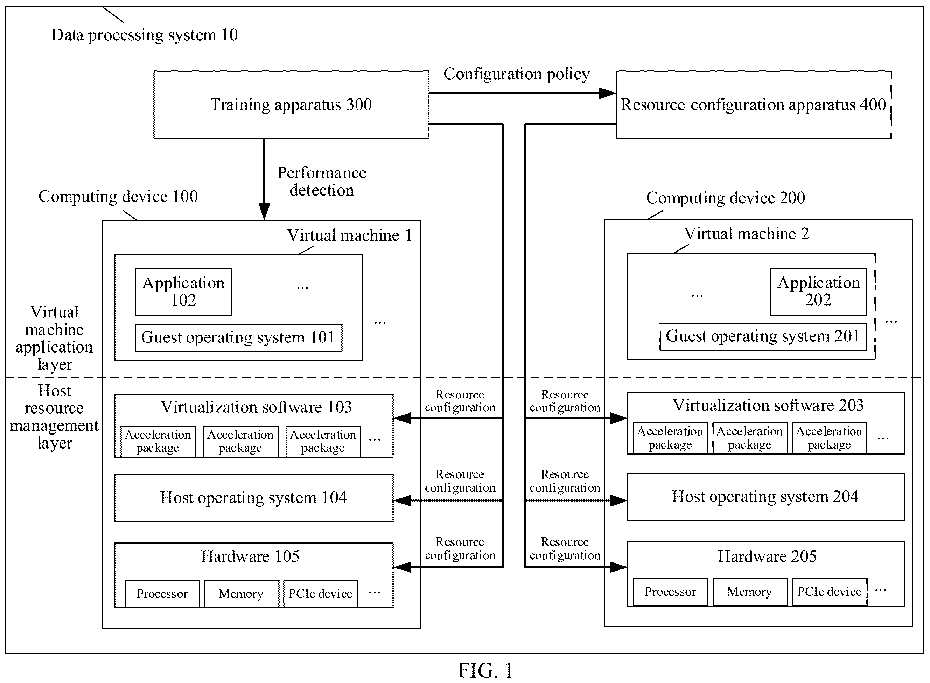

FIG. 1 is a diagram of a structure of a data processing system according to this application. As shown in FIG. 1, the data processing system 10 may include a computing device 100, a computing device 200, a training apparatus 300, and a resource configuration apparatus 400. In addition, the computing device 100, the computing device 200, the training apparatus 300, and the resource configuration apparatus 400 may communicate with each other.

For example, the computing device 100 and the computing device 200 each may be a device including at least one processor, for example, a server. The processor may be any processor or any combination of a central processing unit (central processing unit, CPU), an application-specific integrated circuit (application-specific integrated circuit, ASIC), a programmable logic device (programmable logic device, PLD), a complex programmable logical device (complex programmable logical device, CPLD), a field-programmable gate array (field-programmable gate array, FPGA), generic array logic (generic array logic, GAL), a system on chip (system on chip, SoC), a software-defined infrastructure (software-defined infrastructure, SDI) chip, an artificial intelligence (artificial intelligence, AI) chip, a data processing unit (data processing unit, DPU), and the like.

In the data processing system 10 shown in FIG. 1, the computing device 100 may include a virtual machine application layer and a host resource management layer.

The virtual machine application layer may include one or more virtual machines. In FIG. 1, an example in which a virtual machine 1 is included is used. The virtual machine 1 includes a guest operating system 101 installed and running in a virtual environment, and one or more applications may be further deployed in the virtual machine. In FIG. 1, an example in which an application 102 is deployed is used for description.

The host resource management layer may include virtualization software 103, a host operating system (host operating system, host OS) 104, and hardware 105. The virtualization software 103 may be, for example, software such as hypervisor, and is used to create, schedule, and manage a virtual resource on the computing device 100. In addition, one or more acceleration packages, for example, an acceleration package used to accelerate a memory processing operation, an acceleration package used to accelerate network communication, an acceleration package used to perform security encryption on data, and an acceleration package used to compress data, may be run in the virtualization software 103. Alternatively, the one or more acceleration packages may be run in the host operating system 104. The host operating system 104 is an operating system installed and running on the computing device 100. The hardware 105 may include a plurality of pieces of hardware on the computing device 100, for example, include a processor and a memory, and may further include a peripheral component interconnect express (peripheral component interconnect express, PCIe) device. The PCIe device is a device that can be inserted into a PCIe slot on the computing device 100, and may be, for example, a hard disk, a network interface card, a graphics processing unit (graphics processing unit, GPU), or an offload card.

A structure of the computing device 200 is similar to a structure of the computing device 100. For understanding, refer to FIG. 1 and the foregoing related descriptions of the computing device 100.

The training apparatus 300 is configured to perform policy training based on a system resource parameter and an acceleration package set for an application, and may specifically perform policy training for the application 102. The system resource parameter includes at least one of hardware resources (for example, a processor and a memory) and an operating system resource (for example, a service in an operating system) that are on a computing device or a computing device cluster. The acceleration package set includes at least one acceleration package. The acceleration package may be run in the virtualization software 103, or may be run in the host operating system 104. After the policy training is completed, the training apparatus 300 further outputs a first configuration policy obtained by performing policy training. The first configuration policy is used to perform performance optimization on the application 102, that is, cause performance of the application 102 to reach a high level.

The resource configuration apparatus 400 is configured to configure a resource for an application 202 by using the first configuration policy obtained by performing policy training by the training apparatus 300, so that performance of running the application 202 based on the allocated resource can reach a high level. The performance of the application 202 may be measured by using, for example, a response delay or a throughput. The application 202 matches the application 102. For example, the application 202 and the application 102 have a same identifier, or the application 202 and the application 102 have a same type.

For example, the computing device 100 may be used as a device in a training environment, and the computing device 200 may be used as a device in a production environment. In this way, the training apparatus 300 may perform policy training in the training environment and output the obtained first configuration policy. The resource configuration apparatus 400 performs resource configuration on the application 202 on the computing device 200 by using the first configuration policy, so that performance of the application 202 in the production environment can also reach a high level.

The first configuration policy determined by the training apparatus 300 by performing policy training in the training environment based on the system resource parameter and the at least one acceleration package can be for optimizing the performance of the application 102, for example, may be for optimizing the performance of the application 102 to meet a performance fulfillment condition. Therefore, after the resource configuration apparatus 400 performs, according to the first configuration policy, resource configuration on the application 202 that has the same identifier or the same type as the application 102, the performance of running the application 202 on the computing device 200 based on the allocated resource can also reach the high level.

In addition, in a process of performing performance optimization on the application 102 or achieving the high level of the performance of the application 202, internal data of the application 102 and the application 202 does not need to be accessed. This can effectively ensure security of the application in the virtual machine.

For example, both the training apparatus 300 and the resource configuration apparatus 400 may be implemented by using software or hardware.

In a first example, when implemented by using the software, the training apparatus 300 and the resource configuration apparatus 400 may be implemented by using, for example, program code in a computing device. In this case, the training apparatus 300 and the resource configuration apparatus 400 may be separately deployed independent of the computing device 100 and the computing device 200, or may be located in the computing device 100/computing device 200.

In a second example, when implemented by using the hardware, the training apparatus 300 and the resource configuration apparatus 400 may be implemented by using a physical device including a processor, for example, a server. The processor may be any processor core or any combination of a CPU, an ASIC, a PLD, a CPLD, an FPGA, GAL, a SoC, an SDI chip, an AI chip, a data processing unit (DPU), and the like. In addition, the training apparatus 300 or the resource configuration apparatus 400 may include one or more processors, and may include one or more types of processors. Specifically, a quantity and the type of the processor may be set based on a service requirement of an actual application. This is not limited in embodiments.

The training apparatus 300 and the resource configuration apparatus 400 may be deployed in a plurality of possible implementations. For ease of understanding, this application provides implementation examples of the following several deployment manners.

In a first deployment manner, the training apparatus 300 and the resource configuration apparatus 400 may be deployed on a cloud, and are configured to provide corresponding cloud services for a user (for example, a developer or an operation and maintenance personnel).

In a second deployment manner, the training apparatus 300 and the resource configuration apparatus 400 may be deployed on the computing device 100 or the computing device 200 as PCIe devices.

In a third deployment manner, the training apparatus 300 and the resource configuration apparatus 400 may be implemented by using software, and may be deployed on the computing device 100 or the computing device 200.

In a fourth deployment manner, the training apparatus 300 and the resource configuration apparatus 400 may be deployed in a computing device cluster in which the computing device 100 and the computing device 200 are located. For example, the computing device cluster may further include a computing device 1. The computing device 1 is separately connected to the computing device 100 and the computing device 200, and the training apparatus 300 and the resource configuration apparatus 400 may be specifically deployed on the computing device 1.

It should be noted that the data processing system 10 shown in FIG. 1 is merely used as an example for description, and is not used to limit the data processing system 10. The following describes another possible data processing system by using examples.

Example 1: The another possible data processing system may further include other apparatuses, for example, may further include a database and a client. The database may be used to store a corresponding configuration policy that can cause performance of each application or each type of application in the training environment to reach a high level. The client may be an application program running on a terminal device on a user side, or may be a web browser externally provided by the data processing system, and is used to support a user in intervening resource configuration of the data processing system for an application based on the client. For example, the user may indicate, based on the client, an application on which performance optimization is performed.

Example 2: In the another possible data processing system, the training apparatus 300 and the resource configuration apparatus 400 may be combined into one apparatus. To be specific, the apparatus obtained through the combination can determine the first configuration policy for the application 102 in the training environment, and can configure a resource for the application 202 on the computing device 200 according to the first configuration policy.

Example 3: In the another possible data processing system, the computing device in the training environment and the computing device in the production environment may be a same device. In this case, after the training apparatus 300 determines the first configuration policy for an application on the computing device, the resource configuration apparatus 400 may configure a resource for other applications of a same type on the same computing device according to the first configuration policy. Alternatively, there may be a plurality of computing devices in the training environment, that is, the training apparatus 300 may determine the first configuration policy for the application 102 based on the plurality of computing devices. In addition, there may be a plurality of computing devices in the production environment, that is, the resource configuration apparatus 400 may configure resources on the plurality of computing devices for the application 202.

Example 4: In the another possible data processing system, a plurality of applications may be run in the training environment (including the computing device 100), and the plurality of applications may form a first application set (including the application 102), so that the training apparatus 300 may determine the first configuration policy for the application set in the training environment. Correspondingly, the resource configuration apparatus 400 may configure, by using the first configuration policy, a resource for a second application set (including the application 202) on a plurality of computing devices (including the computing device 200) included in the production environment. An identifier (or a type) of the second application set matches an identifier (or a type) of the first application set.

Example 5: In the another possible data processing system, virtual instances created on the computing device 100 and the computing device 200 may alternatively be containers. In addition, one or more applications may be deployed in a container on each computing device, and the container may not include a guest operating system.

The following describes, with reference to the accompanying drawings, the training method and the resource configuration method provided in this application.

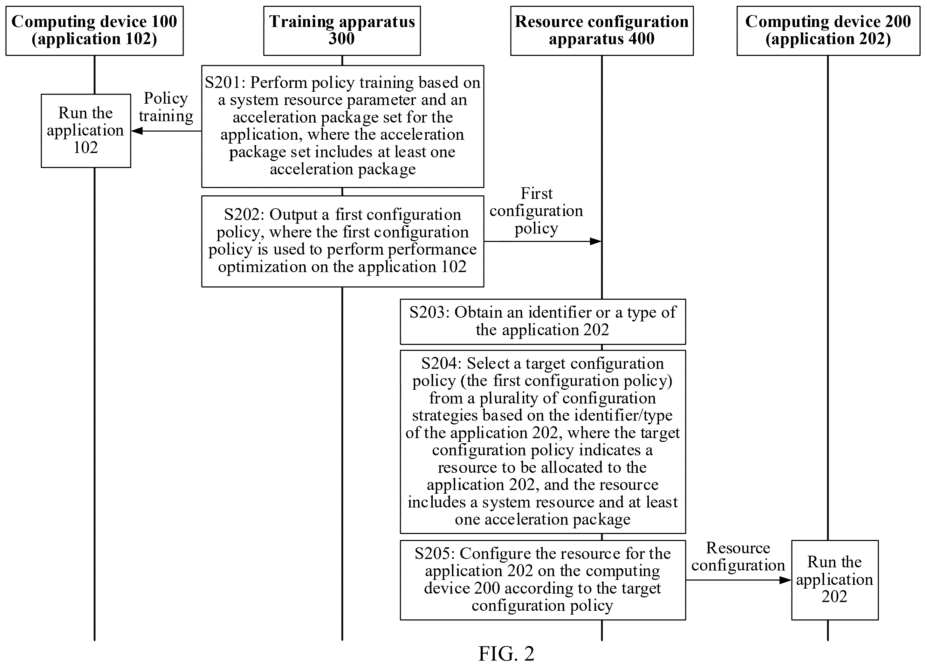

FIG. 2 is a schematic flowchart of a training method and a resource configuration method according to this application. The methods may be applied to the data processing system 10 shown in FIG. 1, or may be applied to another applicable data processing system. For ease of description, an example in which the methods are applied to the data processing system 10 shown in FIG. 1 is used for description.

The resource configuration method shown in FIG. 2 may specifically include the following steps.

S201: The training apparatus 300 performs policy training based on a system resource parameter and an acceleration package set for an application, where the acceleration package set includes at least one acceleration package.

During actual application, a user may need to deploy an application set (including one or more applications, for example, a database application or a big data application) on the computing device 200 (and another computing device) in a production environment, and at least one application in the application set is run to provide a corresponding service like a big data service or a database service. In this case, the user may request, via a client, the training apparatus 300 to determine a configuration policy for the application set, so that after a resource is configured for at least one application in the application set on the computing device 200 (and another computing device) according to the configuration policy, performance of the at least one application reaches a high level.

Correspondingly, in the data processing system 10, the training apparatus 300 may choose to deploy, on the computing device 100 in a test environment, another application set that is the same as the application set or that is of a same type as the application set, and perform policy training for the another application set, to determine a configuration policy that can cause performance of at least one application in the to-be-deployed application set to reach a high level. For ease of understanding and description, in the following descriptions, an application set deployed on the computing device 100 is referred to as a first application set, and an application set deployed on the computing device 200 is referred to as a second application set. In this embodiment, at least one first application in the first application set deployed on the computing device 100 may specifically include the application 102 shown in FIG. 1, and at least one second application in the second application set deployed on the computing device 200 is specifically the application 202 shown in FIG. 1. In this case, the following uses an example in which a first configuration policy is determined for the application 102 and a resource is configured for the application 202 for description.

In this embodiment, the training apparatus 300 may first determine, based on resources on the computing device 100, an appropriate configuration policy for the application 102, which is referred to as the first configuration policy below. In addition, performance of running the application 102 based on an allocated resource indicated by the first configuration policy can reach a high level.

During specific implementation, the training apparatus 300 may perform corresponding policy training based on the system resource parameter and the acceleration package set for the application, to determine the first configuration policy.

The resources on the computing device 100 may include a system resource and an acceleration package set, and the acceleration package set includes at least one acceleration package.

In this embodiment, the acceleration package may be an acceleration program in the virtualization software 103 at the host resource management layer. The acceleration program can be used to perform acceleration processing on a task of an application, to improve a speed of processing the task of the application. For example, an acceleration package 1 to an acceleration package 4 may be run in the virtualization software 103. The acceleration package 1 is used to accelerate memory processing operations (including operations such as memory allocation and memory release), the acceleration package 2 is used to improve a network communication speed, the acceleration package 3 is used to perform security encryption on data, and the acceleration package 4 is used to compress data. When the resource configured for the application 102 includes the acceleration package 1 and the acceleration package 3, in a running process of the application 102, the virtualization software 103 may provide, for the application 102, services of accelerating a memory processing operation and accelerating security encryption of data, to accelerate running of the application 102. It may be understood that the acceleration package on the computing device 100 may provide acceleration services for different applications or different types of applications. For example, the acceleration package 1 may not only provide, for a big data application, a service of accelerating a memory processing operation, but also provide, for a database application, a service of accelerating a memory processing operation.

The system resource may include a service in the host operating system 104 and a resource in the hardware 105, or may include only a service in the host operating system 104/a resource in the hardware 105. A resource in the host operating system 104 may be the service in the host operating system 104. For example, the host operating system 104 may configure a priority of a task for the application 102. A higher priority of the task indicates a higher priority of processing the task of the application 102 by the host operating system 104 in a plurality of tasks. The resource in the hardware 105 may be a related hardware resource that supports application running, for example, may be a hardware resource like a processor core, a memory, a cache, or a network interface card queue that supports the application running. Correspondingly, the system resource on the computing device 100 may be indicated by using the system resource parameter. For example, a CPU 0 in the system resource may be indicated by using a character identifier of the CPU.

In a possible implementation of determining the first configuration policy, the training apparatus 300 may determine the first configuration policy for the application 102 by performing iterative detection on the performance of the application 102.

Specifically, when determining a configuration policy for the application 102 for the first time, the training apparatus 300 may obtain a system resource and a plurality of acceleration packages that are on the computing device 100 and that can be allocated to the application 102, select, based on resource requirements of the application 102, for example, a quantity of processor cores, a memory size, and a quantity of network interface card queues that are required for running the application 102, a part (or all) of the system resource and a part (or all) of the plurality of acceleration packages as resources to be allocated to the application 102, and generate a configuration policy 1 based on this. Alternatively, when the user deploys the application 102 on the computing device, a related configuration for the application 102 may be provided, so that the training apparatus 300 can generate the configuration policy 1 based on provided configuration content. In this embodiment, a specific implementation in which the training apparatus 300 obtains the configuration policy 1 is not limited. The configuration policy 1 may include a subset of the system resource parameter and a subset (the subset may specifically include an identifier of one or more acceleration packages) of the acceleration package set, that is, the configuration policy 1 may indicate to allocate a part/all of the system resource and a part/all of the acceleration packages on the computing device 100 to the application 102.

Then, the training apparatus 300 performs performance detection on the application 102 according to the configuration policy 1, to obtain a performance detection result. For example, a performance test is performed on the application 102. The training apparatus 300 may configure, on the computing device 100 based on the system resource and the acceleration package that are indicated by the configuration policy 1, a corresponding resource for the application 102 located in the virtual machine 1, and start running of the application 102 based on the resource. After running of the application 102 starts, the training apparatus 300 may obtain a test case (test case) for the application 102. For example, the test case may be provided by the user for the training apparatus 300 via the client, or may be a test case that matches the application 102 and that is read by the training apparatus 300 from a locally stored test case library. In this way, the training apparatus 300 may test the application 102 in a running state by using the test case. Specifically, test data in the test case may be sent to the computing device 100, and the application 102 processes the test data received by the computing device 100, and outputs a corresponding test result. The test result may indicate the performance of the application 102. In this embodiment, the test result is referred to as the performance detection result.

For example, performing a performance test on the application 102 may be testing a stress resistance capability of the application 102. For example, the application 102 may be tested for a long time period and under heavy load, so that a data processing capability of the application 102 under the heavy load is determined based on a test result output by the application 102. Alternatively, a response delay of the application 102 may be tested. For example, statistics on a time interval between receiving the test data by the application 102 and outputting the test result for the test data by the application 102 may be collected, to obtain the response delay of the application 102.

During actual application, a test tool may be integrated into the training apparatus 300, so that the training apparatus 300 can perform a performance test on the application 102 in the running state by using the test tool. Alternatively, the data processing system 10 shown in FIG. 1 may further include a test tool, so that the training apparatus 300 may indicate the test tool to perform a performance test on the application 102, and collect the performance detection result of the application 102.

Then, the training apparatus 300 determines whether the performance detection result of the application 102 meets a performance fulfillment condition corresponding to the application 102. For example, when the performance of the application 102 is measured by using a value, the performance fulfillment condition may be represented as a specific threshold, and indicates a value of lowest performance that needs to be met by the performance of the application 102. For example, the performance of the application 102 may be measured by using a data processing delay of the application 102. In this case, the performance fulfillment condition may be 100 milliseconds. When the performance detection result of the application 102 indicates that the data processing delay of the application 102 is 90 milliseconds, because the delay is less than the 100 milliseconds, in this case, the training apparatus 300 may determine that the performance detection result meets the performance fulfillment condition corresponding to the application 102, that is, the performance of the application 102 reaches a high level. When the performance detection result of the application 102 indicates that the data processing delay of the application 102 is 500 milliseconds, because the delay is greater than the 100 milliseconds, in this case, the training apparatus 300 may determine that the performance detection result does not meet the performance fulfillment condition corresponding to the application 102, that is, the performance of the application 102 is low.

During actual application, the performance of the application 102 may alternatively be measured in another manner. Correspondingly, the performance fulfillment condition may alternatively be implemented by using a condition matching the measurement manner. This is not limited.

If the performance detection result of the application 102 does not meet the performance fulfillment condition corresponding to the application 102, the training apparatus 300 adjusts the configuration policy 1 for the application 102 to obtain a configuration policy 2 (namely, a new configuration policy), and re-performs resource configuration and performance detection on the application 102 according to the configuration policy 2.

It may be understood that, when the performance detection result does not meet the performance fulfillment condition, it indicates that performance of the application 102 based on a current resource configuration is low. Therefore, the training apparatus 300 may adjust the configuration policy for the application 102, to further test whether performance of the application 102 based on a new resource configuration can reach a high level.

For example, the training apparatus 300 may generate the configuration policy 2 based on the performance detection result corresponding to the configuration policy 1, and a system resource parameter and an identifier of an acceleration package that can be adjusted in the computing device 100. The system resource parameter that can be adjusted in the computing device 100 may indicate the resource in the host operating system 104 and the resource in the hardware 105. The identifier of the acceleration package that can be adjusted may indicate the acceleration package in the virtualization software 103. For example, the training apparatus 300 may perform, based on the performance detection result corresponding to the configuration policy 1, optimization on the system resource parameter and an identifier of the at least one acceleration package in the acceleration set that can be adjusted in the computing device 100, for example, may perform optimization according to an automatic optimization algorithm, to obtain a new group of a system resource parameter and an identifier of an acceleration package, and generate the configuration policy 2 based on this. The automatic optimization algorithm may be, for example, a genetic algorithm, a simulated annealing algorithm, or a particle swarm optimization algorithm.

Further, the training apparatus 300 may determine, based on an identifier/a type of the application 102, a resource to be allocated to the application 102, and generate a corresponding configuration policy based on this. Specifically, the training apparatus 300 may first obtain the identifier/type of the application 102, and determine, from a plurality of acceleration packages on the computing device 100, at least one acceleration package corresponding to the identifier/type of the application 102, so that the training apparatus 300 can generate the configuration policy 1 based on the system resource and the at least one acceleration package corresponding to the identifier/type of the application 102. When performance of running the application 102 based on the resource indicated by the configuration policy 1 does not meet the performance fulfillment condition, an allocated resource indicated by a configuration policy newly generated by the training apparatus 300 each time (including the configuration policy 2 and a configuration policy newly generated each time subsequently) includes the acceleration package corresponding to the identifier/type of the application 102.

For example, when the application 102 is a big data application, a resource indicated by a configuration policy generated by the training apparatus 300 for the application 102 each time may include the acceleration package 2 used to improve a network communication speed. Alternatively, when the application 102 is a world wide web (world wide web, WEB) application like Ngnix, a resource indicated by a configuration policy generated by the training apparatus 300 for the application 102 each time may include the acceleration package 3 used to perform security encryption on data. Usually, the acceleration package corresponding to the identifier/type of the application 102 may have a fixed improvement effect on the performance of the application 102. Therefore, in a resource indicated by a configuration policy newly generated for the application 102 each time, a necessary acceleration package that can be for improving the performance of the application 102 is determined for the application 102, to help improve efficiency of determining the first configuration policy.

After generating the configuration policy 2, with reference to the foregoing process, the training apparatus 300 may perform resource configuration on the application 102 according to the configuration policy 2, and perform performance detection on the application 102, to determine whether performance of running the application 102 based on a resource indicated by the configuration policy 2 can meet the performance fulfillment condition.

During actual application, if the performance of running the application 102 based on the resource indicated by the current configuration policy still does not meet the performance fulfillment condition, the training apparatus 300 may iteratively generate a plurality of configuration strategies with reference to the foregoing process, and obtain, through performance detection, a performance detection result corresponding to each configuration policy. Each time a new configuration policy is generated, the training apparatus 300 may obtain a performance detection result generated by performing performance detection on the application 102 in a historical time period. For ease of differentiation, the performance detection result is referred to as a historical performance detection result below. In this way, the training apparatus 300 may perform, based on a plurality of historical performance detection results, automatic optimization on the system resource parameter and the identifier of the acceleration package that correspond to the computing device 100. For example, the training apparatus 300 may compare a difference between a newly generated historical performance detection result and another historical performance detection result, and perform optimization calculation based on the difference between the historical performance detection results, to obtain a new group of a system resource parameter and an identifier of an acceleration package.

It is clear that, in addition to generating a new configuration policy in an automatic optimization manner, in another possible implementation, when the performance of the application 102 according to the current configuration policy does not meet the performance fulfillment condition, the training apparatus 300 may alternatively use a pre-trained AI model to perform inference based on a performance detection result corresponding to the current configuration policy, and the system resource parameter and the identifier of the acceleration package that can be adjusted in the computing device 100, and output a new group of a system resource parameter and an identifier of an acceleration package, so that the training apparatus 300 can generate a new configuration policy based on the group of the system resource parameter and the identifier of the acceleration package. In this embodiment, a specific implementation process in which the training apparatus 300 generates the new configuration policy is not limited.

After N (N is a positive integer) iterations of training are performed for the configuration policy based on the foregoing process, the training apparatus 300 determines, through performance detection, that performance of the application 102 can meet the performance fulfillment condition after resource configuration is performed on the application 102 according to a configuration policy generated in an N^{th} iteration. In this case, the training apparatus 300 may determine the configuration generated in the N^{th} iteration as the first configuration policy.

S202: After performing policy training, the training apparatus 300 outputs the first configuration policy, where the first configuration policy is used to perform performance optimization on the application 102.

For example, the training apparatus 300 determines, through performance detection, that the performance of running the application 102 based on the resource indicated by the first configuration policy reaches a high level (that is, meets the performance fulfillment condition). This indicates that the training apparatus 300 has optimized the performance of the application 102 to a high level by adjusting the resource configuration of the application 102. In this case, the training apparatus 300 may output the first configuration policy to the resource configuration apparatus 400, so that the resource configuration apparatus 400 can perform corresponding resource configuration on another application with reference to the resource configuration of the application 102, to improve performance of running the another application.

When outputting the first configuration policy, the training apparatus 300 may output the first configuration policy and the identifier/type of the application 102 in a corresponding manner. Alternatively, the first configuration policy output by the training apparatus 300 may include the identifier/type of the application 102. In this way, the resource configuration apparatus 400 can conveniently determine an identifier/a type of an application on which the first configuration policy is suitable for being used to perform resource configuration.

During actual application, with reference to the process described in step S201 and step S202, the training apparatus 300 may respectively determine and output, for a plurality of different applications or a plurality of different types of applications, configuration strategies corresponding to the applications. In this way, the resource configuration apparatus 400 may obtain a plurality of configuration strategies, and each configuration policy can cause performance of one application or one type of application to reach a high level.

S203: The resource configuration apparatus 400 obtains an identifier or a type of the application 202.

In this embodiment, the resource configuration apparatus 400 may first determine the identifier or the type of the application 202 to be deployed on the computing device 200.

For example, the identifier/type of the application 202 may be obtained through automatic sensing by the resource configuration apparatus 400 by performing self-learning on the application 202, or may be actively provided by the user for the resource configuration apparatus 400.

S204: The resource configuration apparatus 400 selects a target configuration policy from the plurality of configuration strategies based on the identifier/type of the application 202, where the target configuration policy indicates a resource to be allocated to the application 202, the resource includes a system resource and an acceleration package set for the application 202, and the acceleration package set includes at least one acceleration package.

S205: The resource configuration apparatus 400 configures, for the application 202 on the computing device 200 according to the target configuration policy, the resource indicated by the target configuration policy.

For example, the resource configuration apparatus 400 may store a plurality of configuration strategies and identifiers/types of a plurality of applications in a corresponding manner, and each configuration policy corresponds to an identifier or a type of one application. A correspondence between the identifier/type of the application and the configuration policy may be created and stored by the resource configuration apparatus 400 according to a configuration policy output by the training apparatus 300 for the application. A resource indicated by each configuration policy includes a system resource and an acceleration package, and system resources or acceleration packages indicated by different configuration strategies may be different. In this way, after receiving the identifier/type of the application 202 to be deployed on the computing device 200, for example, the resource configuration apparatus 400 may first search the identifiers/types of the plurality of applications corresponding to the plurality of configuration strategies to determine whether there is an identifier/a type of one application matching the identifier/type of the application 202. If there is an identifier/a type of one application matching the identifier/type of the application 202, the resource configuration apparatus 400 may determine a configuration policy corresponding to the found identifier/type of the application as the target configuration policy in step S204. The resource indicated by the determined target configuration policy is the resource configured for the application 202 on the computing device 200.

For example, it is assumed that the plurality of configuration strategies stored in the resource configuration apparatus 400 include the first configuration policy, and the first configuration policy corresponds to the type (or the identifier) of the application 102. In this case, the resource configuration apparatus 400 may determine, by matching types (or identifiers) of different applications, that the type (or the identifier) of the application 202 matches the type (or the identifier) of the application 102, and determine the first configuration policy corresponding to the type (or the identifier) of the application 102 as the target configuration policy.

When the identifier of the application 102 matches the identifier of the application 202, the application 202 and the application 102 may be a same application.

When the type of the application 102 matches the type of the application 202, the application 202 and the application 102 may be two different applications of a same type.

Usually, if the application 202 and the application 102 are the same application, the type of the application 202 is the same as the type of the application 102, or the like, a load characteristic of the application 202 in a running process is usually the same as or similar to a load characteristic of the application 102. In this case, if the application 102 has high performance when run based on the resource indicated by the first configuration policy, the application 202 usually also has high performance when run based on the resource configuration indicated by the first configuration policy. Therefore, the resource configuration apparatus 400 may perform same resource configuration on the application 202 in a virtual machine on the computing device 200 according to the first configuration policy (namely, the target configuration policy). In this way, performance of running the application 202 on the computing device 200 can also reach a high level.

During specific implementation, the resource configuration apparatus 400 may determine a corresponding system resource and acceleration package on the computing device 200 based on the system resource parameter and the identifier of the acceleration package that are included in the first configuration policy, and allocate the determined system resource and acceleration package to the application 202. For example, according to the first configuration policy, the resource configuration apparatus 400 may allocate one or more acceleration packages in virtual machine software 203 to the application 202, allocate a service resource in a host operating system 204 to the application 202, and allocate hardware resources such as a processor core, a memory, a cache, and a network interface card queue in hardware 205 to the application 202.

Further, when a plurality of applications of a same type as the application 102 need to be deployed on the computing device 200 and another computing device, the resource configuration apparatus 400 may perform same resource configuration on all of the plurality of applications by using the first configuration policy corresponding to the application 102. In this way, even if there is a hardware or computing power difference between different computing devices, applications of a same type on different computing devices can achieve high performance based on the same resource configuration. In addition, the resource configuration apparatus 400 performs resource configuration on the plurality of applications according to the unified first configuration policy, and does not need to perform differentiated configuration on the plurality of applications based on the difference between the computing devices. This can effectively improve resource configuration efficiency for the plurality of applications.

In some examples, the identifier of the application may be, for example, attribute information such as a name, a character identifier, or a version number of the application, or may be other applicable information.

The type of the application may be classified based on a load characteristic of the application. For example, applications may be classified into a high-load application or a low-load application based on load sizes of the applications; or applications may be classified into a compute-intensive application or a memory-intensive application based on load types of the applications. Alternatively, the type of the application may be classified based on a function of the application. For example, applications may be classified into a big data application, a database application (for example, Spark or Hive), or a WEB application (for example, a Ngnix application). A specific implementation of application type classification is not limited in this embodiment.

In addition, the type of the application may be manually specified by the user. For example, when the user requests, via the client, the data processing system 10 to deploy the application 202 in the virtual machine on the computing device 200, the type of the application 202 may be provided on the client, and the client sends the type of the application 202 to the resource configuration apparatus 400. In this way, the resource configuration apparatus 400 may deploy the applications 102 of the same type in the virtual machine on the computing device 100 based on the application type specified by the user, and determine, by performing the foregoing process, the first configuration policy (namely, the target configuration policy) that can cause the performance of the application 102 to reach a high level, so that the corresponding resource is configured for the application 202 on the computing device 200 according to the determined first configuration policy.

Alternatively, the type of the application may be obtained by the resource configuration apparatus 400 in a self-learning manner. For example, after the user requests, via the client, the data processing system 10 to deploy the application 202 in the virtual machine on the computing device 200, the resource configuration apparatus 400 may first preliminarily configure a resource for the application 202 on the computing device 200 based on a resource requirement of the application 202. In a process in which the application 202 is run based on the preliminarily configured resource, the resource configuration apparatus 400 may collect resource usage data of the application 202 in the computing device 100, for example, may collect a performance monitoring unit (performance monitoring unit, PMU) indicator corresponding to the application 202, where the PMU indicator can be used to monitor performance and an execution status of a processor core that supports running of the application 202; or may collect usage data of the application 202 for a network resource on the computing device 200. Then, the resource configuration apparatus 400 may analyze the load characteristic of the application 202 in the running process based on the data collected on the computing device 100, and determine the type of the application 202 based on this. In this way, the resource configuration apparatus 400 may deploy the applications 102 of the same type in the virtual machine on the computing device 100 based on the type of the application 202 that is obtained through analysis, and determine, by performing step S301 to step S304, a configuration policy that can cause the performance of the application 102 to reach a high level, so as to adjust the resource configured for the application 202 on the computing device 200 according to the determined configuration policy. For example, the resource preliminarily configured for the application 202 includes four processor cores running on different CPUs, and the resource configuration apparatus 400 may re-allocate four processor cores on a same CPU to the application 202 according to the configuration policy.

Further, when the resource configuration apparatus 400 obtains the type of the application 202 through automatic sensing based on the load characteristic of the application 202, in an actual application scenario, when the application 202 is run, due to a use behavior of the user for the application 202 or the like, load of the application 202 may change greatly in a time period, in other words, the load characteristic of the application 202 changes. For example, a plurality of users may frequently use, in a time period, a computing service provided by the application 202, resulting in a significant increase (in comparison with another time period) in the load of the application 202. Therefore, in the running process of the application 202, the resource configuration apparatus 400 may continuously monitor a load status of the application 202, and determine, based on the load status, whether the type of the application 202 changes. If the type of the application 202 does not change, the resource configuration apparatus 400 may not need to adjust the resource configuration of the application 202. If the type of the application 202 changes, the resource configuration apparatus 400 may re-determine a type of the application 202 based on the load characteristic of the application 202, determine, from the plurality of configuration strategies based on the re-determined type of the application 202, a new configuration policy corresponding to the re-determined type, and configure a resource for the application 202 on the computing device 200 according to the newly determined configuration policy, so that the application 202 can be allocated with an appropriate resource to adapt to a load change of the application 202, to ensure that the performance of the application 202 is continuously maintained at a high level.

During actual application, the user may deploy a plurality of applications in the virtual machine on the computing device 200. In this case, for each to-be-deployed application, the resource configuration apparatus 400 may determine an appropriate configuration policy for each application in the foregoing manner, and configure a corresponding resource for the application on the computing device 200 according to the configuration policy.

Alternatively, the resource configuration apparatus 400 may perform resource configuration by integrating the plurality of applications.

Specifically, resources on the computing device 200 are limited, and resources requested to be configured for different applications are usually different. In this case, the resource configuration apparatus 400 may use the plurality of applications as an application set. For ease of differentiation, the application set is referred to as the second application set below. The second application set may include a plurality of second applications (which may include the application 202) that need to be deployed on the computing device 200. In addition, the resource configuration apparatus 400 may determine a performance fulfillment condition corresponding to the application set, where the performance fulfillment condition indicates a condition that performance of each application in the application set needs to meet. For example, the user may provide, for the resource configuration apparatus 400 via the client, lowest performance that each second application requires to meet, so that the resource configuration apparatus 400 can use lowest performance respectively indicated for the plurality of applications by the user as the performance fulfillment condition corresponding to the application set.

Then, the resource configuration apparatus 400 may obtain a configuration policy of the second application set, where the configuration policy includes system resource parameters and acceleration package sets for all applications in the second application set, the acceleration package set includes at least one acceleration package, and the configuration policy can indicate resources allocated to the plurality of applications in the application set.

For example, the training apparatus 300 may deploy the first application set on the computing device 100. The first application set includes a plurality of first applications, and an identifier/a type of the first application set matches an identifier/a type of the second application set. Specifically, the first application set and the second application set may include a same application, or may include applications of a same type.

Then, the training apparatus 300 may generate the configuration policy 1, and perform performance detection on the plurality of first applications in the first application set by using the configuration policy 1, to obtain performance detection results of the plurality of applications. For example, the training apparatus 300 may configure corresponding resources for the plurality of first applications in the first application set on the computing device 100 based on the resource indicated by the configuration policy 1. After running of the plurality of first applications in the first application set starts based on the allocated resources, the training apparatus 300 performs a performance test on each application by using a corresponding test case, and obtains a performance detection result of each application. For a specific implementation process in which the training apparatus 300 generates the configuration policy 1 and performs resource configuration and a performance test on each first application in the first application set by using the configuration policy 1, refer to the foregoing related descriptions of the resource configuration and the performance test of the application 102. Details are not described herein.

In this way, the training apparatus 300 may determine, based on the performance detection results corresponding to the first applications in the first application set, whether performance of all the first applications meets the performance fulfillment condition. If the performance of all the first applications meets the performance fulfillment condition, the training apparatus 300 may output the configuration policy 1 to the resource configuration apparatus 400, so that the resource configuration apparatus 400 deploys the second applications in the second application set in the virtual machine on the computing device 200, and configures corresponding resources for the second applications in the second application set according to the configuration policy 1. In this way, performance of the plurality of deployed second applications during running can reach a high level.

However, if performance of a part of first applications in the first application set does not meet the performance fulfillment condition, the training apparatus 300 may generate a new configuration policy, namely, the configuration policy 2, for example, may generate the new configuration policy in a manner like automatic optimization or AI model inference. Then, the training apparatus 300 re-configures resources for the plurality of first applications in the first application set according to the newly generated configuration policy 2, and re-performs performance tests on the plurality of first applications in the first application set, to detect whether performance of the plurality of first applications after resource configuration is performed according to the new configuration policy (namely, the configuration policy 2) meets the performance fulfillment condition. If the performance of the plurality of first applications still does not meet the performance fulfillment condition, the training apparatus 300 may iteratively perform the foregoing process, determine, by continuously adjusting the configuration policy, a configuration policy that can cause the performance of the plurality of first applications in the first application set to meet the performance fulfillment condition, and output the configuration policy to the resource configuration apparatus 400. If the performance of the plurality of first applications can meet the performance fulfillment condition, the training apparatus 300 may output the newly generated configuration policy 2 to the resource configuration apparatus 400, so that the resource configuration apparatus 400 configures, for the plurality of second applications in the second application set in the virtual machine on the computing device 200 according to the configuration policy 2, corresponding resources including system resources, acceleration packages, and the like on the computing device 200.

In this way, for the plurality of second applications deployed on the computing device 200, the resource configuration apparatus 400 can also configure appropriate resources for the plurality of applications, to achieve high-level performance of all the second applications.

The plurality of first applications in the first application set may be deployed on one computing device, and the plurality of second applications in the second application set may be deployed on one computing device. For example, the plurality of first applications may be deployed on the computing device 100, and the plurality of second applications may be deployed on the computing device 200.

Alternatively, the plurality of first applications in the first application set may be deployed on a plurality of computing devices, and the plurality of second applications in the second application set may be deployed on a plurality of computing devices. In this case, a deployment manner of the plurality of first applications in the first application set on computing devices in the test environment is the same as a deployment manner of the plurality of second applications in the second application set on computing devices in the production environment. For example, an application A1 in the plurality of first applications may be deployed on a computing device a1 in the test environment, and an application B1 in the plurality of first applications may be deployed on a computing device b1 in the test environment. In addition, an application A2 in the plurality of second applications may be deployed on a computing device a2 in the production environment, and an application B2 in the plurality of second applications may be deployed on a computing device b2 in the production environment. In addition, the resources allocated by the resource configuration apparatus 400 to the plurality of second applications in the second application set are resources on a plurality of computing devices. In this case, all of the plurality of computing devices may provide a same quantity of resources. For example, each computing device provides two processors and a memory of 4 GB to support running of the plurality of second applications. Alternatively, all of the plurality of computing devices may provide different quantities or different types of resources. For example, a computing device 1 in the plurality of computing devices provides a total resource of four processors required by the plurality of second applications, a computing device 2 provides a total resource of a memory of 16 GB required by the plurality of second applications, and a computing device 3 provides a total resource of three acceleration packages required by the plurality of second applications. Each second application may be bound or may not be bound to a resource like an allocated acceleration package. This is not limited.

Further, the resource configuration apparatus 400 may determine, for different application sets with reference to the foregoing manner of determining a configuration policy for one application set, a configuration policy corresponding to each application set, and store the application set and the configuration policy in a corresponding manner. Specifically, an identifier/a type of the application set and the configuration policy may be stored in a corresponding manner. In this way, when the user requests, via the client, to deploy a plurality of applications on the computing device 200 (or another computing device), the resource configuration apparatus 400 may search for an identifier/a type of an application set that matches an identifier/a type of an application set including the plurality of applications, and search a stored correspondence for a configuration policy corresponding to the application set, so that the resource configuration apparatus 400 can configure resources on the computing device 200 for the plurality of applications in the application set according to the determined configuration policy.

In this embodiment, the training apparatus 300 may determine, on the computing device 100 in the test environment, a configuration policy that can be used to cause performance of running at least one first application in the first application set to reach a high level, and the resource configuration apparatus 400 performs, according to the same configuration policy, resource configuration on at least one second application in the second application set that needs to be located in the virtual machine on the computing device 200. The type (or the identifier) of the first application set matches the type (or the identifier) of the second application set. In this way, after the resource configuration is performed on the at least one second application in the second application set according to the configuration policy, performance of running the at least one second application in the second application set on the computing device 200 based on a configured resource can also reach a high level. In addition, in a process of achieving the high level of the performance of the at least one second application in the second application set, internal data of the at least one first application in the first application set and the at least one second application in the second application set does not need to be accessed. This can effectively ensure security of the application in the virtual machine.

In the embodiment shown in FIG. 2, a process in which the training apparatus 300 determines, by detecting performance on the computing device 100, the first configuration policy that causes the performance of the application 102 to reach a high level, and the resource configuration apparatus 400 performs, according to the first configuration policy, resource configuration on the application 202 located on the computing device 200 is mainly described.

In another possible embodiment, in a running process of an application, the training apparatus 300 may continuously adjust, based on performance of actually providing a service by the application, a resource configured for the application, so that a resource finally configured for the application can cause the performance of the application to reach a high level.

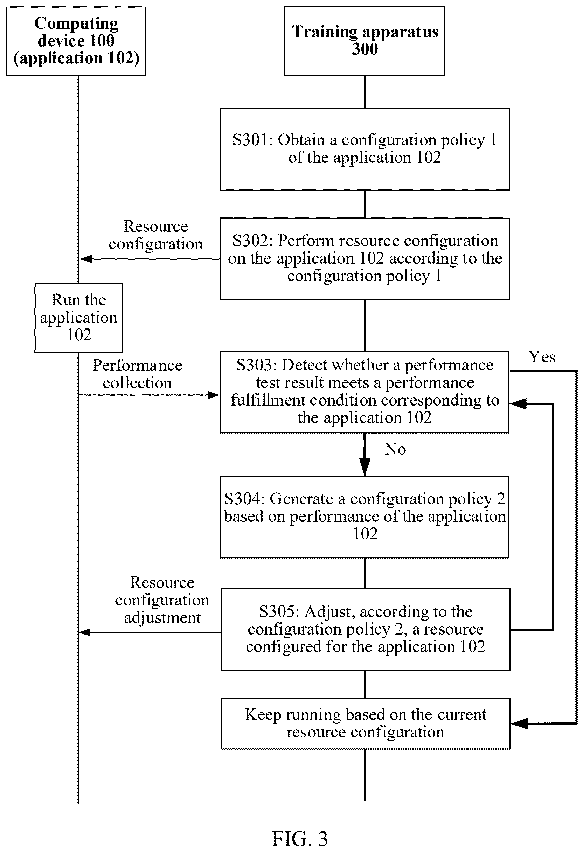

With reference to FIG. 3, the following describes a schematic flowchart of a resource configuration method according to an embodiment of this application by using an example in which a resource configured for the application 102 is adjusted on the computing device 100. As shown in FIG. 3, the method may specifically include the following steps.

S301: The training apparatus 300 generates a configuration policy 1 of the application 102 based on a system resource parameter and an acceleration package set for the application, where an allocated resource indicated by the configuration policy 1 includes a system resource and an acceleration package set on the computing device 100, and the acceleration package set includes at least one acceleration package.

In this embodiment, when a user (for example, an administrator) requests, via a client, to deploy the application 102 in a virtual machine on the computing device 100, the training apparatus 300 may obtain a configuration policy used to perform resource configuration on the application 102.

For example, the training apparatus 300 may generate the configuration policy 1 based on a resource requirement of the application 102 during deployment, and a parameter indicating a system resource available for allocation to the application 102 on the computing device 100 and an identifier of an acceleration package. For example, the training apparatus 300 may collect currently available system resources on the computing device 100, determine, from the available system resources based on a quantity of resources required by the application 102, a resource to be allocated to the application 102, and generate the configuration policy 1 based on this. Alternatively, the configuration policy 1 may be provided by the user, so that the training apparatus 300 can receive the configuration policy 1 sent by the user via the client.

S302: The training apparatus 300 performs resource configuration on the application 102 on the computing device 100 according to the configuration policy 1.

After the resource configuration on the application 102 is completed, running of the application 102 may start based on the allocated resource, and the application 102 starts to provide a corresponding service. For example, when the application 102 is specifically a database application like Spark or Hive, the application 102 may externally provide a corresponding database service in a running process, including services such as data storage and data access.

S303: The training apparatus 300 detects whether performance of the application 103 meets a performance fulfillment condition; and if the performance of the application does not meet the performance fulfillment condition, continues to perform step S304, or if the performance of the application meets the performance fulfillment condition, the application 102 keeps running based on the current resource configuration.

S304: When the performance of the application 102 does not meet the performance fulfillment condition, the training apparatus 300 generates a configuration policy 2 based on the performance of the application 102, where an allocated resource indicated by the configuration policy 2 includes a system resource and an acceleration package set on the computing device 100, the acceleration package set includes at least one acceleration package, and the resources indicated by the configuration policy 2 and the configuration policy 1 are different.

In this embodiment, in the running process of the application 102, the training apparatus 300 may collect the performance of the application 102 in the running process. For example, the performance of the application 102 is measured by using a response delay of the application 102. The training apparatus 300 may monitor a moment 1 at which the application 102 receives a service request and a moment 2 at which the application 102 outputs a service processing result in response to the service request, and obtain the response delay of the application 102 through calculation based on a time interval between the moment 1 and the moment 2, to obtain the performance of the application 102 in the running process.

In this case, the training apparatus 300 may determine whether the performance of the application 102 in the actual running process meets the performance fulfillment condition. If the performance of the application 102 in the actual running process meets the performance fulfillment condition, it indicates that the performance of the application 102 reaches a high level. If the performance of the application 102 in the actual running process does not meet the performance fulfillment condition, it indicates that the performance of the application 102 is low. In this case, the training apparatus 300 may generate a new configuration policy, to adjust, by using the newly generated configuration policy, the resource configured for the application 102.

S305: The training apparatus 300 adjusts, on the computing device 100 according to the configuration policy 2, the resource configured for the application 102, and returns to perform step S303.

For example, it is assumed that the configuration policy 1 indicates that four processor cores are configured for the application 102, and the four processor cores are located on a plurality of different CPUs, and the configuration policy 2 indicates that four processor cores configured for the application 102 are all located on a same CPU. Therefore, the training apparatus 300 may adjust, according to the configuration policy 2, the four processor cores allocated to the application 102 to four processor cores on a same CPU.

After adjusting the resource configuration on the application 102 is completed, the application 102 may continue to be run and provide a service based on the newly allocated resource.

In this way, in the running process of the application 102, the training apparatus 300 iteratively adjusts, based on actual performance of the application 102, the resource configured for the application 102 until the performance of the application 102 can meet the performance fulfillment condition, so that the performance of the application 102 can be optimized. In addition, in a process of improving the performance of the application 102, the training apparatus 300 does not need to access internal data of the application 102. This can effectively ensure security of the application 102 in the virtual machine.

Further, when the performance of the application 102 meets the performance fulfillment condition, the training apparatus 300 may record a configuration policy currently used to perform resource configuration on the application 102, and store the configuration policy and a type/an identifier of the application 102 in a corresponding manner. In this way, when the user subsequently requests the data processing system 10 to deploy other applications of the same type in the virtual machine, the training apparatus 300 may determine, based on the type/an identifier of the application, a configuration policy corresponding to the type/identifier of the application 102 (the types/identifiers of the two applications are the same), and configure resources for the another applications on the computing device 200 (or another computing device) according to the configuration policy.

In the foregoing embodiments shown with reference to FIG. 1 to FIG. 3, an example in which the resource configuration apparatus 300 improves performance of an application in a virtual machine (a virtual instance) is used for description. In another possible embodiment, a computing device may alternatively not include a virtual instance, so that an application can be directly run in a physical environment of the computing device, for example, run on a host of the computing device. In this case, after a better configuration policy is determined by performing performance detection on the application, when a same application or a same type of application is deployed on the computing device according to the configuration policy, performance of the deployed application can also reach a high level.

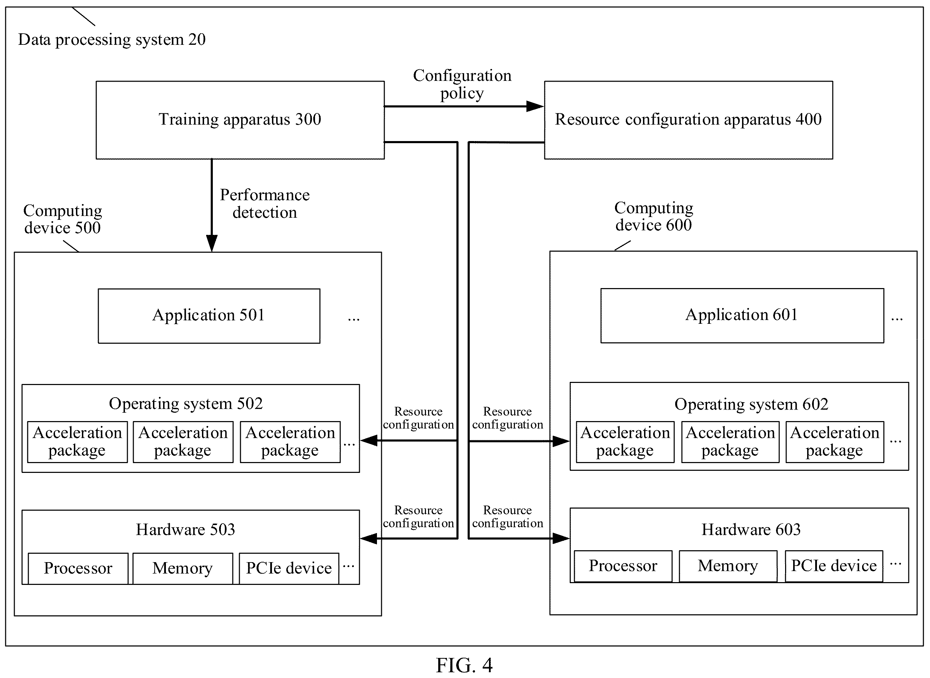

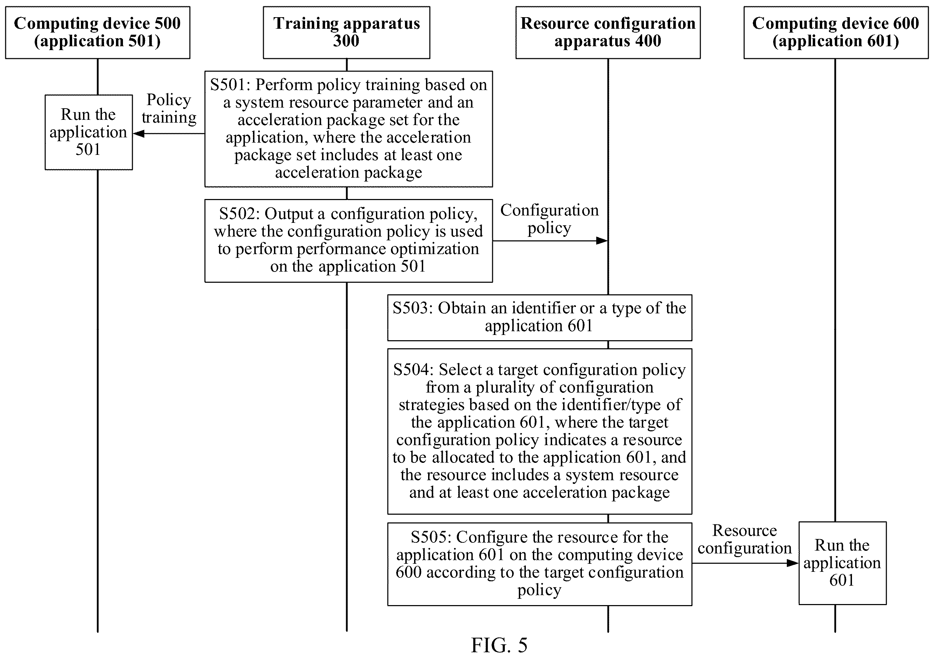

With reference to FIG. 4 and FIG. 5, the following describes in detail another data processing system and another resource configuration method respectively provided in embodiments of this application.

FIG. 4 is a diagram of a structure of another data processing system according to this application. As shown in FIG. 4, the data processing system 20 may include a computing device 500, a computing device 600, a training apparatus 300, and a resource configuration apparatus 400. In addition, the computing device 500, the computing device 600, the training apparatus 300, and the resource configuration apparatus 400 may communicate with each other.

For example, the computing device 500 and the computing device 600 each may be a device including at least one processor, for example, a server. The processor may be any processor or any combination of a CPU, an ASIC, a PLD, a CPLD, an FPGA, GAL, a SoC, an SDI chip, an AI chip, a DPU, and the like.

As shown in FIG. 4, the computing device 500 may include an application 501, an operating system 502, and hardware 503.

One or more applications may be deployed on the computing device 500. In FIG. 4, an example in which the computing device 500 includes one application (namely, the application 501) is used for description.

The operating system 502 is an operating system installed and running on the computing device 500, and may include one or more acceleration packages, for example, an acceleration package used to accelerate a memory processing operation, an acceleration package used to accelerate network communication, an acceleration package used to perform security encryption on data, and an acceleration package used to compress data.

The hardware 503 may include a plurality of pieces of hardware on the computing device 500, for example, include a processor and a memory, and may further include a PCIe device. The PCIe device may be, for example, a hard disk, a network interface card, a GPU, or an offload card.

A structure of the computing device 600 is similar to a structure of the computing device 500. For understanding, refer to FIG. 5 and the foregoing related descriptions of the computing device 500.

The training apparatus 300 is configured to perform policy training based on a system resource parameter and an acceleration package set for an application, and may specifically perform policy training for the application 501. The system resource parameter includes at least one of hardware resources (for example, a processor and a memory) and an operating system resource (for example, a service in an operating system) that are on a computing device or a computing device cluster. The acceleration package set includes at least one acceleration package. After the policy training is completed, the training apparatus 300 further outputs a first configuration policy obtained by performing policy training. The first configuration policy is used to perform performance optimization on the application 501, that is, cause performance of the application 501 to reach a high level.

The resource configuration apparatus 400 is configured to configure a resource for an application 601 by using the first configuration policy obtained by performing policy training by the training apparatus 300, so that performance of running the application 601 based on the allocated resource can reach a high level. The performance of the application 601 may be measured by using, for example, a response delay or a throughput. The application 601 matches the application 501. For example, the application 601 and the application 501 have a same identifier, or the application 601 and the application 501 have a same type.

For example, both the training apparatus 300 and the resource configuration apparatus 400 shown in FIG. 4 may be implemented by using software or hardware. When implemented by using the software, both the training apparatus 300 and the resource configuration apparatus 400 may be implemented by using, for example, program code in a computing device. When implemented by using the hardware, both the training apparatus 300 and the resource configuration apparatus 400 may be implemented by using a physical device including a processor, for example, a server.

For deployment manners of the training apparatus 300 and the resource configuration apparatus 400 in FIG. 4, refer to the foregoing related descriptions of the deployment manners of the training apparatus 300 and the resource configuration apparatus 400 in FIG. 1. Details are not described herein.

It should be noted that the data processing system 20 shown in FIG. 4 is merely used as an example for description, and is not used to limit the data processing system 20. In another possible data processing system, the data processing system 20 may further include another apparatus, for example, may further include a database. Alternatively, the training apparatus 300 and the resource configuration apparatus 400 may be combined into one apparatus. Alternatively, the data processing system 20 may include more computing devices, and support application deployment on the more computing devices. Alternatively, a plurality of applications may be deployed on each of the computing device 500 and the computing device 600.

FIG. 5 is a schematic flowchart of a training method and a resource configuration method according to this application. The methods may be applied to the data processing system 20 shown in FIG. 4, or may be applied to another applicable data processing system. For ease of description, an example in which the methods are applied to the data processing system 20 shown in FIG. 4 is used for description.

The resource configuration method shown in FIG. 5 may specifically include the following steps.

S501: The training apparatus 300 performs policy training based on a system resource parameter and an acceleration package set for an application, where the acceleration package set includes at least one acceleration package.

For example, the training apparatus 300 may complete policy training by sequentially generating a plurality of different configuration strategies, and performing resource configuration and performance detection on the application 501 by using the plurality of different configuration strategies, to determine a configuration policy that can be used to cause performance of the application 501 to reach a high level.

S502: After performing policy training, the training apparatus 300 outputs the configuration policy, where the configuration policy is used to perform performance optimization on the application 501.

Specifically, the training apparatus 300 may output the configuration policy to the resource configuration apparatus 400.

S503: The resource configuration apparatus 400 obtains an identifier or a type of the application 601.

In this embodiment, the resource configuration apparatus 400 may first determine the identifier or the type of the application 601 to be deployed on the computing device 600.

For example, the identifier/type of the application 202 may be obtained through automatic sensing by the resource configuration apparatus 400 by performing self-learning on the application 601, or may be actively provided by a user for the resource configuration apparatus 400.

S504: The resource configuration apparatus 400 selects a target configuration policy from a plurality of configuration strategies based on the identifier/type of the application 601, where the target configuration policy indicates a resource to be allocated to the application 601, the resource includes a system resource and an acceleration package set for the application 601, and the acceleration package set includes at least one acceleration package.

The selected target configuration policy is the configuration policy output by the training apparatus 300 in step S502.

For example, the resource configuration apparatus 400 may store a plurality of configuration strategies and identifiers/types of a plurality of applications in a corresponding manner, and each configuration policy corresponds to an identifier or a type of one application. A resource indicated by each configuration policy includes a system resource and an acceleration package, and system resources or acceleration packages indicated by different configuration strategies may be different.

The identifier of the application may be, for example, attribute information such as a name, a character identifier, or a version number of the application, or may be other applicable information.

The type of the application may be classified based on a load characteristic of the application. For example, applications may be classified into a high-load application or a low-load application based on load sizes of the applications; or applications may be classified into a compute-intensive application or a memory-intensive application based on load types of the applications. Alternatively, the type of the application may be classified based on a function of the application. For example, applications may be classified into a big data application or a database application. A specific implementation of application type classification is not limited in this embodiment.

In addition, the type of the application may be manually specified by the user, or may be obtained by the resource configuration apparatus 400 in a self-learning manner. For example, the resource configuration apparatus 400 may determine the type of the application by sensing the load characteristic of the application.

S505: The resource configuration apparatus 400 configures, for the application 601 on the computing device 200 according to the target configuration policy, the resource indicated by the target configuration policy.

For specific implementation of the training method and the resource configuration method shown in FIG. 5 and technical effects thereof, refer to the foregoing related descriptions in the embodiment shown in FIG. 2. Details are not described herein.

It should be noted that another appropriate step combination that can be figured out by a person skilled in the art based on the content described above also falls within the protection scope of this application. In addition, a person skilled in the art should further understand that embodiments described in this specification all belong to example embodiments, and the involved actions are not necessarily required by this application.

The foregoing describes, with reference to FIG. 1 to FIG. 5, the training methods and the resource configuration methods provided in embodiments of this application. The following describes, with reference to the accompanying drawings, functions of a training apparatus and a resource configuration apparatus provided in embodiments of this application, and a computing device that implements the training apparatus and the resource configuration apparatus.

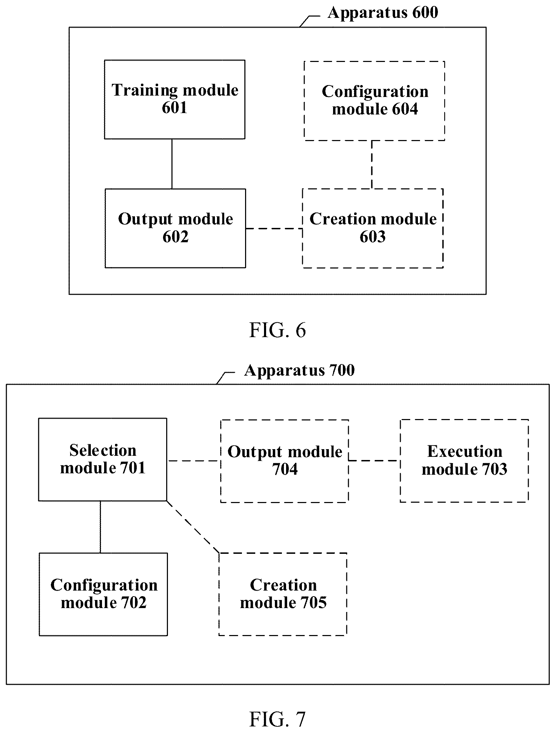

FIG. 6 is a diagram of a structure of a training apparatus. As shown in FIG. 6, the apparatus 600 includes:
a training module 601, configured to perform policy training based on a system resource parameter and an acceleration package set for an application, where the acceleration package set includes at least one acceleration package; and
an output module 602, configured to output a first configuration policy after policy training is performed, where the first configuration policy is used to perform performance optimization on a first application set, and the first application set includes at least one first application.

In a possible implementation, the acceleration package set is used to accelerate a plurality of application sets of different types or with different identifiers.

In this case, the apparatus 600 may further include:
a creation module 603, configured to create a correspondence between the first configuration policy and the first application set.

In a possible implementation, the first configuration policy includes at least one of a subset of the system resource parameter and a subset of the acceleration package set.

In a possible implementation, the at least one first application is deployed on a host, or the at least one first application is deployed on a virtual instance.

In a possible implementation, the output module 602 is specifically configured to:
when a result obtained by performing performance detection on the at least one first application indicates that performance of the at least one first application meets a performance fulfillment condition, output the first configuration policy corresponding to the first application set.

In a possible implementation, the training module 601 is specifically configured to:
obtain a plurality of historical performance detection results, where the historical performance detection result is a result generated by performing performance detection on the at least one first application in the first application set in a historical time period, none of the plurality of historical performance detection results meets the performance fulfillment condition, and the at least one first application in the first application set generates different historical performance detection results according to different configuration strategies; and
perform optimization based on the plurality of historical performance detection results to obtain the first configuration policy.

In a possible implementation, the training module 601 is specifically configured to:
obtain a type or an identifier of the first application set; and
perform policy training based on the system resource parameter and an acceleration package set corresponding to the type or the identifier of the first application set.

In a possible implementation, the apparatus 600 further includes:
a configuration module 604, configured to configure, by using the first configuration policy, a resource for a second application included in a second application set, where a type of the second application set is the same as the type of the first application set, or an identifier of the second application set is the same as the identifier of the first application set.

In a possible implementation, a deployment manner of the first application set is the same as a deployment manner of the second application set.

The apparatus 600 used for training that is shown in FIG. 6 corresponds to the training apparatus 300 in the method embodiment shown in FIG. 2. Therefore, for a specific implementation and technical effects of the apparatus 600 shown in FIG. 6, refer to related descriptions in the foregoing embodiment. Details are not described herein.

FIG. 7 is a diagram of a structure of a resource configuration apparatus. As shown in FIG. 7, the apparatus 700 includes:
a selection module 701, configured to select a target configuration policy from a plurality of configuration strategies based on an identifier or a type of an application set, where the application set includes at least one application, the target configuration policy indicates a resource to be allocated to the at least one application, the resource includes a system resource and an acceleration package set for the at least one application, and the acceleration package set includes at least one acceleration package; and
a configuration module 702, configured to configure the resource for the at least one application according to the target configuration policy.

In a possible implementation, performance of running the at least one application based on the resource meets a performance fulfillment condition.

In a possible implementation, the at least one application is deployed on one computing device, or the at least one application is deployed on a plurality of computing devices included in a computing device cluster.

In a possible implementation, the configuration module 702 is specifically configured to:
configure, according to the target configuration policy, the resource for the at least one application on the plurality of computing devices that are included in the computing device cluster and on which the at least one application is deployed.

In a possible implementation, the apparatus 700 further includes:
an execution module 703, configured to perform policy training based on a system resource parameter and an acceleration package set for an application, where the system resource parameter indicates the system resource; and
an output module 704, configured to output a first configuration policy after policy training is performed, where the first configuration policy is used to perform performance optimization on at least one application included in a trained application set, and the first configuration policy is one of the plurality of configuration strategies.

In a possible implementation, the execution module 703 is specifically configured to:
obtain a type or an identifier of the trained application set; and
perform policy training based on the system resource parameter and an acceleration package set corresponding to the type or the identifier of the trained application set.

In a possible implementation, the acceleration package set is used to accelerate a plurality of application sets of different types or with different identifiers.

The apparatus 700 further includes:
a creation module 705, configured to create a correspondence between the first configuration policy and the trained application set.

In a possible implementation, the first configuration policy includes at least one of a subset of the system resource parameter and a subset of the acceleration package set.

In a possible implementation, the output module 704 is specifically configured to:
when a result obtained by performing performance detection on the at least one application included in the trained application set indicates that performance of the at least one application included in the trained application set meets the performance fulfillment condition, output the first configuration policy corresponding to the trained application set.

In a possible implementation, the execution module 703 is specifically configured to:
obtain a plurality of historical performance detection results, where the historical performance detection result is a result generated by performing, in a historical time period, performance detection on the at least one application included in the trained application set, none of the plurality of historical performance detection results meets the performance fulfillment condition, and the at least one application included in the trained application set generates different historical performance detection results according to different configuration strategies; and
perform optimization based on the plurality of historical performance detection results to obtain the first configuration policy.

The apparatus 700 used for resource configuration that is shown in FIG. 7 corresponds to the resource configuration apparatus 700 in the method embodiment shown in FIG. 2. Therefore, for a specific implementation and technical effects of the apparatus 700 shown in FIG. 7, refer to related descriptions in the foregoing embodiment. Details are not described herein.

In the embodiments shown in FIG. 1 to FIG. 5, the training apparatus 300 in the policy training process and the resource configuration apparatus 400 in the resource configuration process may be software configured on a computing device, and the software is run on the computing device, so that the computing device can implement a function of the training apparatus 300 or the resource configuration apparatus 400. The following describes in detail the training apparatus 300 in the policy training process and the resource configuration apparatus 400 in the resource configuration process from a perspective of hardware device implementation.

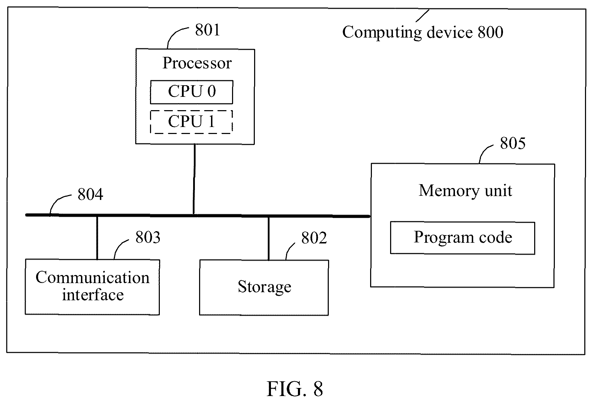

FIG. 8 is a diagram of a structure of a computing device. The training apparatus 300 or the resource configuration apparatus 400 may be deployed on the computing device. The computing device may be a computing device (for example, a server) in a cloud environment, a computing device in an edge environment, a terminal device, or the like, and may be specifically configured to implement a function of the training apparatus 300 or the resource configuration apparatus 400 in the embodiment shown in FIG. 2.

FIG. 8 is a diagram of a hardware structure of a computing device 800 according to this application. The computing device 800 may implement, for example, functions of the training apparatus 300 or the resource configuration apparatus 400 in the embodiments shown in FIG. 2, FIG. 3, and FIG. 5.

As shown in FIG. 8, the computing device 800 includes a processor 801, a storage 802, and a communication interface 803. The processor 801, the storage 802, and the communication interface 803 communicate with each other through a bus 804, or may implement communication in another manner like wireless transmission. The storage 802 is configured to store instructions, and the processor 801 is configured to execute the instructions stored in the storage 802. Further, the computing device 800 may further include a memory unit 805, and the memory unit 805 may be connected to the processor 801, the storage medium 802, and the communication interface 803 through the bus 804. The storage 802 stores program code, and the processor 801 may invoke the program code stored in the storage 802 to perform the following operations:
performing policy training based on a system resource parameter and an acceleration package set for an application, where the acceleration package set includes at least one acceleration package; and
outputting a first configuration policy after performing policy training, where the first configuration policy is used to perform performance optimization on a first application set, and the first application set includes at least one first application.

Alternatively, the processor 801 may invoke the program code stored in the storage 802 to perform the following operations:
selecting a target configuration policy from a plurality of configuration strategies based on an identifier or a type of an application set, where the application set includes at least one application, the target configuration policy indicates a resource to be allocated to the at least one application, the resource includes a system resource and an acceleration package set for the at least one application, and the acceleration package set includes at least one acceleration package; and
configuring the resource for the at least one application according to the target configuration policy.

It should be understood that in this embodiment of this application, the processor 801 may be a CPU, or the processor 801 may be another general-purpose processor, a digital signal processor (DSP), an application-specific integrated circuit (ASIC), a field-programmable gate array (FPGA), another programmable logic device, a discrete gate, a transistor logic device, a discrete device component, or the like. The general-purpose processor may be a microprocessor, any conventional processor, or the like.

The storage 802 may include a read-only memory and a random access memory, and provide the instructions and data for the processor 801. The storage 802 may further include a non-volatile random access memory.

The storage 802 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 803 is configured to communicate with another device connected to the computing device 800. The bus 804 may further include a power bus, a control bus, a status signal bus, and the like, in addition to a data bus. However, for clear description, various types of buses in the figure are marked as the bus 804.

It should be understood that the computing device 800 according to this embodiment of this application may correspond to the training apparatus 300 or the resource configuration apparatus 400 in embodiments of this application, and may correspondingly perform the method performed by the training apparatus 300 or the resource configuration apparatus 400 in the method shown in the embodiment like FIG. 2 according to embodiments of this application. The foregoing and other operations and/or functions implemented by the computing device 800 are separately intended to implement the procedure of the corresponding method in the embodiment like FIG. 2. For brevity, details are not described herein again.

An embodiment of this application further provides a computer-readable storage medium. The computer-readable storage medium may be any usable medium accessible by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing training method and resource configuration method.

An embodiment of this application further provides a computer program product. The computer program product includes one or more computer instructions. When the computer instructions are loaded and executed on a computing device, the procedures or functions according to embodiments of this application are all or partially generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any one of the foregoing training method and resource configuration method needs to be used, the computer program product may be downloaded and executed on a computing device.

All or some of the foregoing embodiments may be implemented by using software, hardware, firmware, or any combination thereof. When the software is used to implement embodiments, all or some of the foregoing embodiments may be implemented in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A training method, comprising:
performing policy training based on a system resource parameter and an acceleration package set for an application, wherein the acceleration package set comprises at least one acceleration package; and
outputting a first configuration policy after performing policy training, wherein the first configuration policy is used to perform performance optimization on a first application set, and the first application set comprises at least one first application.

2. The method according to claim 1, wherein the acceleration package set is used to accelerate a plurality of application sets of different types or with different identifiers; and
the method further comprises: creating a correspondence between the first configuration policy and the first application set.

3. The method according to claim 1 or 2, wherein the first configuration policy comprises at least one of a subset of the system resource parameter and a subset of the acceleration package set.

4. The method according to any one of claims 1 to 3, wherein the at least one first application is deployed on a host, or the at least one first application is deployed on a virtual instance.

5. The method according to any one of claims 1 to 4, wherein the outputting the first configuration policy specifically comprises:
when a result obtained by performing performance detection on the at least one first application indicates that performance of the at least one first application meets a performance fulfillment condition, outputting the first configuration policy corresponding to the first application set.

6. The method according to claim 5, wherein the performing policy training based on the system resource parameter and the acceleration package set for the application comprises:
obtaining a plurality of historical performance detection results, wherein the historical performance detection result is a result generated by performing performance detection on the at least one first application in the first application set in a historical time period, none of the plurality of historical performance detection results meets the performance fulfillment condition, and the at least one first application in the first application set generates different historical performance detection results according to different configuration strategies; and
performing optimization based on the plurality of historical performance detection results to obtain the first configuration policy.

7. The method according to any one of claims 1 to 6, wherein the performing policy training based on the system resource parameter and the acceleration package set for the application comprises:
obtaining a type or an identifier of the first application set; and
performing policy training based on the system resource parameter and an acceleration package set corresponding to the type or the identifier of the first application set.

8. The method according to any one of claims 1 to 7, further comprising:
configuring, by using the first configuration policy, a resource for a second application comprised in a second application set, wherein a type of the second application set is the same as the type of the first application set, or an identifier of the second application set is the same as the identifier of the first application set.

9. The method according to claim 8, wherein a deployment manner of the first application set is the same as a deployment manner of the second application set.

10. A resource configuration method, comprising:
selecting a target configuration policy from a plurality of configuration strategies based on an identifier or a type of an application set, wherein the application set comprises at least one application, the target configuration policy indicates a resource to be allocated to the at least one application, the resource comprises a system resource and an acceleration package set for the at least one application, and the acceleration package set comprises at least one acceleration package; and
configuring the resource for the at least one application according to the target configuration policy.

11. The method according to claim 10, wherein performance of running the at least one application based on the resource meets a performance fulfillment condition.

12. The method according to claim 10 or 11, wherein the at least one application is deployed on one computing device, or the at least one application is deployed on a plurality of computing devices comprised in a computing device cluster.

13. The method according to claim 12, wherein the configuring the resource for the at least one application according to the target configuration policy specifically comprises:
configuring, according to the target configuration policy, the resource for the at least one application on the plurality of computing devices that are comprised in the computing device cluster and on which the at least one application is deployed.

14. The method according to any one of claims 10 to 13, further comprising:
performing policy training based on a system resource parameter and an acceleration package set for an application, wherein the system resource parameter indicates the system resource; and
outputting a first configuration policy after performing policy training, wherein the first configuration policy is used to perform performance optimization on at least one application comprised in a trained application set, and the first configuration policy is one of the plurality of configuration strategies.

15. The method according to claim 14, wherein the performing policy training based on the system resource parameter and the acceleration package set for the application comprises:
obtaining a type or an identifier of the trained application set; and
performing policy training based on the system resource parameter and an acceleration package set corresponding to the type or the identifier of the trained application set.

16. The method according to claim 14 or 15, wherein the acceleration package set is used to accelerate a plurality of application sets of different types or with different identifiers, and the method further comprises: creating a correspondence between the first configuration policy and the trained application set.

17. The method according to any one of claims 14 to 16, wherein
the first configuration policy comprises at least one of a subset of the system resource parameter and a subset of the acceleration package set.

18. The method according to claim 14, wherein the outputting the first configuration policy specifically comprises:
when a result obtained by performing performance detection on the at least one application comprised in the trained application set indicates that performance of the at least one application comprised in the trained application set meets the performance fulfillment condition, outputting the first configuration policy corresponding to the trained application set.

19. The method according to claim 18, wherein the performing policy training based on the system resource parameter and the acceleration package set for the application comprises:
obtaining a plurality of historical performance detection results, wherein the historical performance detection result is a result generated by performing, in a historical time period, performance detection on the at least one application comprised in the trained application set, none of the plurality of historical performance detection results meets the performance fulfillment condition, and the at least one application comprised in the trained application set generates different historical performance detection results according to different configuration strategies; and
performing optimization based on the plurality of historical performance detection results to obtain the first configuration policy.

20. A training apparatus, wherein the apparatus comprises:
a training module, configured to perform policy training based on a system resource parameter and an acceleration package set for an application, wherein the acceleration package set comprises at least one acceleration package; and
an output module, configured to output a first configuration policy after policy training is performed, wherein the first configuration policy is used to perform performance optimization on a first application set, and the first application set comprises at least one first application.

21. The apparatus according to claim 20, further comprising a creation module, configured to create a correspondence between the first configuration policy and the first application set, wherein the acceleration package set is used to accelerate a plurality of application sets of different types or with different identifiers.

22. The apparatus according to claim 20 or 21, wherein the first configuration policy comprises at least one of a subset of the system resource parameter and a subset of the acceleration package set.

23. The apparatus according to any one of claims 20 to 22, wherein the output module is specifically configured to: when a result obtained by performing performance detection on the at least one first application indicates that performance of the at least one first application meets a performance fulfillment condition, output the first configuration policy corresponding to the first application set.

24. A resource configuration apparatus, wherein the apparatus comprises:
a selection module, configured to select a target configuration policy from a plurality of configuration strategies based on an identifier or a type of an application set, wherein the application set comprises at least one application, the target configuration policy indicates a resource to be allocated to the at least one application, the resource comprises a system resource and an acceleration package set for the at least one application, and the acceleration package set comprises at least one acceleration package; and
a configuration module, configured to configure the resource for the at least one application according to the target configuration policy.

25. The apparatus according to claim 24, wherein performance of running the at least one application based on the resource meets a performance fulfillment condition.

26. The apparatus according to claim 24 or 25, wherein the at least one application is deployed on one computing device, or the at least one application is deployed on a plurality of computing devices comprised in a computing device cluster.

27. The apparatus according to claim 26, wherein the configuration module is specifically configured to configure, according to the target configuration policy, the resource for the at least one application on the plurality of computing devices that are comprised in the computing device cluster and on which the at least one application is deployed.

28. A computing device, comprising a processor and a storage, wherein
the processor is configured to execute instructions stored in the storage, to enable the computing device to perform steps of the method according to any one of claims 1 to 19.

29. A computer program product comprising instructions, wherein when the computer program product runs on at least one computing device, the at least one computing device is enabled to perform steps of the method according to any one of claims 1 to 19.

30. A computer-readable storage medium, comprising instructions, wherein when the instructions are run on a computing device, the computing device is enabled to perform steps of the method according to any one of claims 1 to 19.

31. A data processing system, wherein the data processing system comprises a training apparatus and a resource configuration apparatus, the training apparatus is configured to perform the method according to any one of claims 1 to 7, and the resource configuration apparatus is configured to perform the method according to any one of claims 10 to 13.

32. The data processing system according to claim 31, further comprising at least one computing device, wherein the at least one computing device is used for application deployment.
